# EUROPÄISCHE PATENTANMELDUNG

(11) **EP 4 082 693 A1**
(43) Veröffentlichungstag der Anmeldung: **02.11.2022**
(21) Anmeldenummer: 21170854.0
(22) Anmeldetag: 28.04.2021
(51) Int. Cl.: B22F 3/10, H01F 3/02, H01F 41/02, H02K 15/02, B22F 5/00

(54) **VERFAHREN ZUR HERSTELLUNG EINER DREIDIMENSIONALEN STRUKTUR**

(71) Anmelder: Siemens Aktiengesellschaft, 80333 München (DE)
(72) Erfinder: Denneler, Stefan, 81371 München (DE); Schuh, Carsten, 85598 Baldham (DE); Soller, Thomas, 94469 Deggendorf (DE)

(57) **Zusammenfassung**

Die Erfindung betrifft ein Verfahren zur Herstellung einer dreidimensionalen Struktur (2) aus planaren Einzelkomponenten (3, 4), umfassend folgende Schritte:
a) Drucken eines Grünkörpers (6) einer ersten Schicht (8) mittels eines Siebdruckverfahrens (10),
b) Aufbringen einer Trennschicht (12) auf den Grünkörper (6) der ersten Schicht (8),
c) Drucken eines zweiten Grünkörpers (6) einer zweiten Schicht (14) auf die Trennschicht (12),
d) Wiederholen der Schritte a) bis c), bis die dreidimensionale Struktur (2) in einem Grünzustand (16) vorliegt,
e) Wärmebehandlung (26) der dreidimensionalen Struktur (2) bei einer Temperatur, bei der ein Sintervorgang der Grünkörper (6) der einzelnen Schichten (8, 14) eintritt,
f) Entfernen der Trennschicht (12), so dass die dreidimensionale Struktur (2) entsteht.

## Beschreibung

Die Erfindung betrifft ein Verfahren zur Herstellung einer dreidimensionalen Struktur nach Patentanspruch 1.

Ein neues Verfahren zur Herstellung von Magnetblechen für elektrische Maschinen stellt der Sieb- bzw. der Schablonendruck dar. Hierbei wird, ausgehend von Metallpulvern, insbesondere Eisenpulvern, zunächst eine Druckpaste erzeugt, diese dann mittels einer Sieb- und/oder Schablonendrucktechnik zu einem Grünkörper in Form einer Dickschicht verarbeitet und schließlich der entstandene Grünkörper durch thermische Behandlung, einer Entbinderung und einer Sinterung in ein metallisches Blech überführt. Für den Einsatz in einer elektrischen Maschine müssen die einzelnen Bleche anschließend mit einer Isolationsschicht versehen und zu einem Blechstapel laminiert werden. Für einen einzigen Magnetblechstapel werden dabei teilweise mehrere tausend Einzelbleche benötigt. Das erforderliche Handling einer derartigen Anzahl an Einzelkomponenten, das beispielsweise den Transport, die Lagerung, die Beschickung oder die Entnahme beinhaltet, ist besonders aufwändig. Dabei sind insbesondere die thermische Prozessierung sowie die Vor- und Nachbehandlung der einzelnen Komponenten produktionstechnisch aufwändig.

Die Aufgabe der Erfindung besteht darin, ein Verfahren zur Herstellung einer dreidimensionalen Struktur wie beispielsweise eines Magnetblechstapels bereitzustellen, das gegenüber dem Stand der Technik einen geringeren logistischen und fertigungstechnischen Aufwand bedeutet.

Die Lösung der Aufgabe besteht in einem Verfahren zur Herstellung einer dreidimensionalen Struktur mit den Merkmalen des Patentanspruchs 1.

Das Verfahren gemäß Patentanspruch 1 zur Herstellung einer dreidimensionalen Struktur, die mehrere planare Einzelkomponenten umfasst, beinhaltet folgende Schritte:
a) Drucken eines Grünkörpers einer ersten Schicht mittels eines Siebdruckverfahrens,
b) Aufbringen einer Trennschicht auf den Grünkörper der ersten Schicht,
c) Drucken eines zweiten Grünkörpers einer zweiten Schicht auf die Trennschicht,
d) Wiederholen der Schritte a) - c), bis die dreidimensionale Struktur in einem Grünzustand vorliegt,
e) Wärmebehandlung der dreidimensionalen Struktur bei einer Temperatur, bei der ein Sintervorgang der einzelnen Schichten der Grünkörper eintritt (ein Sintervorgang der Trennschichten ist dabei nicht angestrebt),
f) Entfernen der Trennschichten, sodass eine dreidimensionale Struktur aus einzelnen, voneinander separierten planaren Einzelkomponenten entsteht.

Das beschriebene Verfahren weist gegenüber dem Stand der Technik den Vorteil auf, dass zeit- und platzsparend eine Schicht über die andere gesetzt werden kann, bis eine dreidimensionale Struktur in einem Grünzustand entsteht. Anschließend kann diese dreidimensionale Struktur mit der Vielzahl von einzelnen Schichten, den Vorläufern der planaren Einzelkomponenten, jeweils in einem weiteren Wärmebehandlungsschritt verarbeitet werden, sodann eine Vielzahl planarer Einzelkomponenten in einem einzigen Prozessschritt zusammen hergestellt werden können. Im Gegensatz zu der Technologie gemäß dem Stand der Technik, wonach jede einzelne Schicht als Grünkörper und Vorläufer einer späteren planaren Einzelkomponente, beispielsweise eines Magnetbleches, einzeln gedruckt und wärmebehandelt, also gesintert, wird, kann mit dem beschriebenen Verfahren eine beliebige Anzahl von planaren Einzelkomponenten mit einem Sinterschritt und einem Wärmebehandlungsschritt hergestellt werden.

Zur Terminologie: Der Grünkörper der ersten und der zweiten sowie jeder weiteren Schicht geht nach dem Wärmebehandlungsschritt in die planare Einzelkomponente über. Die erste und die zweite Schicht sowie weitere Schichten sind grundsätzlich von gleicher Natur. Die dreidimensionale Struktur im Grünzustand entspricht der Stapelung einer Vielzahl von Schichten von Grünkörpern, die jeweils durch Trennschichten voneinander getrennt sind. Die eigentliche dreidimensionale Struktur weist im Wesentlichen dieselbe Geometrie auf wie diese im Grünzustand (unter Berücksichtigung eines möglichen Sinterschwundes), die Trennschichten sind jedoch bereits herausgelöst.

Unter einem Grünkörper wird dabei ein Vorkörper für eine spätere Wärmebehandlung verstanden. Ein Grünkörper ist an sich in der Regel mechanisch selbsttragend und mechanisch begrenzt belastbar. Durch die Wärmebehandlung bevorzugt in Form eines Sintervorgang, bei dem anders als bei einem Schmelzvorgang einzelne Körner im Grünkörper durch Diffusionsprozesse eine zusammenhängende, stofflich verbundene Struktur bilden, wird der Grünkörper in einen Sinterkörper überführt. Nach Durchführung des Sintervorganges wird die jeweilige erste Schicht oder zweite Schicht als planare Einzelkomponente (entspricht einem Sinterkörper), beispielsweise als Magnetblech, bezeichnet.

Unter einem Siebdruckverfahren wird ein Verfahren verstanden, bei dem eine Paste beispielsweise mittels eines Rakels auf ein Substrat aufgebracht wird, wobei eine Schicht entsteht, die üblicherweise eine Dicke aufweist, die im Bereich zwischen 70 µm und 150 µm liegt. Die Paste wird nur auf bestimmte, nicht abgedeckte Bereiche, die mittels einer Schablone freigehalten sind, auf das Substrat gedruckt. In der Regel wird die Paste dabei durch ein Sieb gedruckt, was aber nicht zwingend notwendig ist. Ein Schablonendruck ohne Verwendung eines Siebes wird ebenfalls unter dem Begriff Siebdruckverfahren subsumiert.

Dabei ist es ferner zweckmäßig, dass die Trennschicht sauber von den planaren Einzelkomponenten nach dem Wärmebehandlungsvorgang entfernt wird, indem die Einzelkomponenten wieder vereinzelt werden. Auf diese Weise ist die Trennschicht am saubersten zu entfernen. Die planaren Einzelkomponenten werden im Weiteren bevorzugt wieder zu der dreidimensionalen Struktur zusammengesetzt. Bei der dreidimensionalen Struktur handelt es sich insbesondere beispielsweise um einen Magnetblechstapel für eine elektrische Maschine, insbesondere für einen Rotor einer elektrischen Maschine.

In diesem Zusammenhang ist es auch zweckmäßig, wenn die Einzelkomponenten nach dem Vereinzeln in gleicher geometrischer Anordnung, in der sie vor dem Vereinzeln vorgelegen haben, erneut zusammengesetzt werden. Dies hat den Vorteil, dass mögliche Dickenunterschiede oder geometrische Fehler, beispielsweise eine konkave Wölbung oder ein keilförmiger Dickenverlauf der Einzelkomponenten, wieder ausgeglichen werden können, da sie in ihre Ursprungsanordnung zurückgebracht werden.

In einer vorteilhaften Ausgestaltungsform der Erfindung ist die Trennschicht eine Salzschicht. Salze weisen zum Teil sehr hohe Schmelz- bzw. Sintertemperaturen auf. Dabei ist es zweckmäßig, dass die Sintertemperatur der Trennschicht über der Sintertemperatur der Grünkörper der einzelnen Schichten, die die planare Einzelkomponente im Grünzustand bilden, liegt. Unter einem Salz werden hierbei Verbindungen aus Anionen und Kationen verstanden, die im Wesentlichen (d. h, zu mehr als 60 %) eine ionische Bindung aufweisen und eine kristalline Struktur umfassen. Unter Salzen werden auch Oxide verstanden, die diese Kriterien erfüllen und die metallische Kationen aufweisen.

In einer bevorzugten Ausgestaltungsform wird die Trennschicht gemäß Schritt f) mittels eines flüssigen Mediums entfernt. Dabei ist es auch zweckmäßig, ein Salz für die Trennschicht zu verwenden, da Salze häufig durch flüssige Lösungsmittel lösbar sind und gleichzeitig, wie erwähnt, einen relativ hohen Schmelzpunkt bzw. eine relativ hohe Sintertemperatur aufweisen können. Bei der Entfernung mit einem flüssigen Medium kann es sich einerseits um ein Lösungsmittel oder auch um ein Mittel handeln, das eine chemische Zersetzung bewirkt. Hierbei wäre beispielsweise eine Säure oder eine Lauge zum Zersetzen der Trennschicht bzw. des Salzes in der Trennschicht zweckmäßig.

Andererseits kann es auch zweckmäßig sein, dass die Trennschicht gemäß Schritt f) in Patentanspruch 1 durch Einwirken von pulsierenden Druck- und Zugkräften entfernt wird. Dies kann rein mechanisch erfolgen, zweckmäßig ist aber auch das Einbringen von Zug- und Druckkräften über einen Ultraschallgenerator. Hierbei ist ebenfalls wieder die Verwendung eines flüssigen Mediums zweckmäßig.

Ferner ist es von Vorteil, dass eine Druckpaste zum Drucken des Grünkörpers der Schichten als funktionalen Bestandteil Eisenpartikel aufweist. Diese Eisenpartikel führen zu besonders guten magnetischen Eigenschaften, wenn die planare Einzelkomponente als Magnetblech verwendet wird. Dabei ist es wiederum zweckmäßig, wenn die Eisenpartikel mindestens 97 Gew.-% reines Eisen aufweisen.

Die Trennschicht ist bevorzugt deutlich dünner als die Schicht, die zur planaren Einzelkomponente wird, sie beträgt bevorzugt weniger als 20 µm.

Es kann bei verschiedenen Ablösungsmethoden der Trennschicht von der planaren Einzelkomponente gemäß Punkt f) des beschriebenen Verfahrens zweckmäßig sein, die planare Einzelkomponente nach dem Sinterprozess zu schützen, insbesondere, wenn eine chemische Abtrennung der Trennschicht erfolgt. In dem Fall ist es zweckmäßig, neben den Trennschichten noch eine zusätzliche Inertschicht für die erste Schicht und zweite Schicht, also die Vorläufer der planaren Einzelkomponente, aufzubringen, welche von Lösungsmitteln, Säuren und Laugen nicht oder nur in sehr geringem Maße in ihrer Struktur verändert wird. Diese Inertschicht kann beispielsweise das Oxid des Aluminiums, des Zirkons, der Cers, des Yttriums oder eine Mischung daraus umfassen.

Weitere Ausgestaltungsformen und weitere Merkmale der Erfindung werden anhand der folgenden Figuren näher erläutert. Dabei zeigen:
- Figur 1: ein Verfahren zur Herstellung einer dreidimensionalen Struktur,
- Figur 2: eine dreidimensionale Struktur im Grünzustand,
- Figur 3: einen Wärmebehandlungsprozess und einen Vereinzelungsprozess der dreidimensionalen Struktur im gesinterten Zustand,
- Figur 4: einen Prozess zum Stapeln von planaren Einzelkomponenten zu einer dreidimensionalen Struktur,
- Figur 5: eine dreidimensionale Struktur in Form eines Blechpaketes und
- Figur 6: ein Blechpaket auf einer Rotorwelle für eine elektrische Maschine.

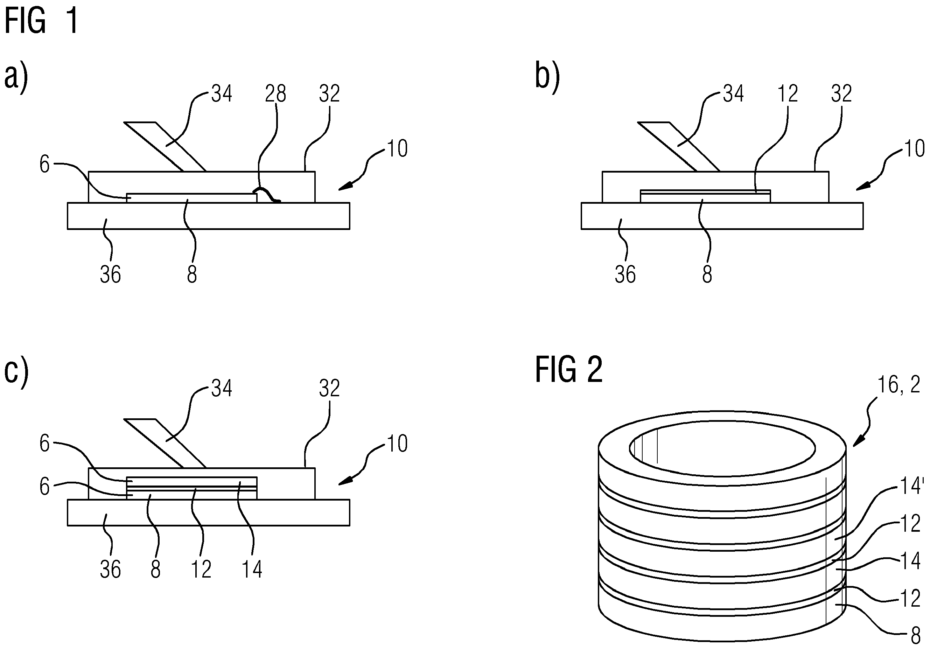

In Figur 1a) ist schematisch ein Siebdruckverfahren 10 dargestellt, bei dem ein Rahmen 32 mit einem nicht dargestellten Sieb oder einer nicht dargestellten Schablone auf ein Substrat 36 gelegt ist, und eine Druckpaste 28 mithilfe eines Rakels 34 auf das Substrat 36 aufgebracht wird, sodass ein Grünkörper 6 einer ersten Schicht 8 entsteht. Die erste Schicht 8 ist eine sogenannte Dickschicht, sie hat üblicherweise eine Dicke zwischen 80 und 150 µm, wobei sie in Form eines Grünkörpers 6 ausgestaltet ist, der neben den funktionalen Bestandteilen der ersten Schicht 8, die im Wesentlichen Eisenpartikel umfassen, noch weitere Bindemittel enthält, die die rheologischen Eigenschaften der Paste 28 gewährleisten, sodass daraus eine Schicht 8 herstellbar ist.

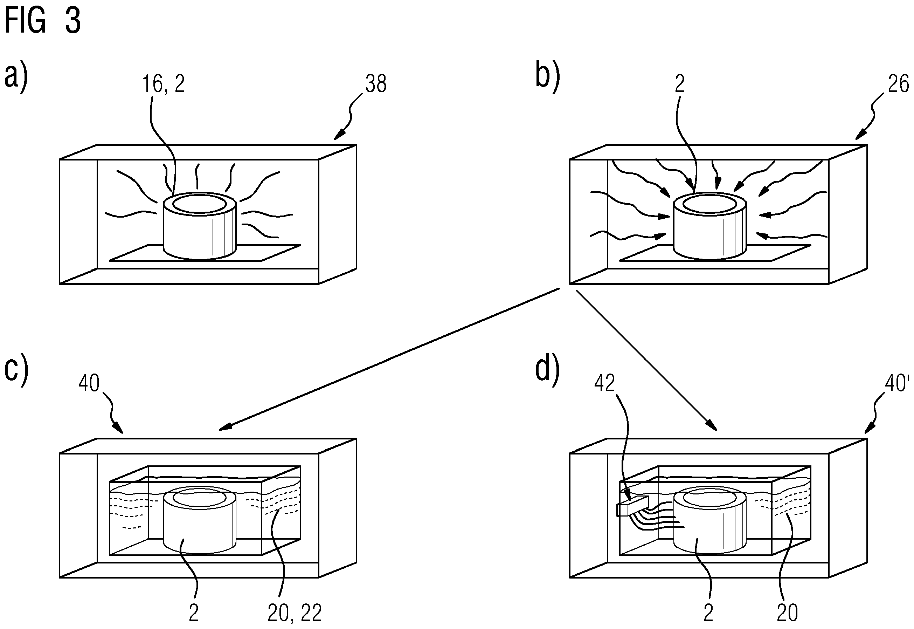

In Figur 1b) ist ein weiterer Prozessschritt zur Herstellung der dreidimensionalen Struktur 2 dargestellt, wobei auf die erste Schicht 8 eine Trennschicht 12 aufgebracht wird. Bei der Trennschicht 12 handelt es sich bevorzugt um eine Salzschicht, die ggf. auch noch Additive enthalten kann. Die Trennschicht 12 ist deutlich dünner ausgestaltet als die erste Schicht 8. Sie weist bevorzugt eine Dicke auf, die geringer als 20 µm, bevorzugt geringer als 10 µm ist. Auf die Wirkweise der Salzschicht wird noch in der Beschreibung bezüglich Figur 3 näher eingegangen werden. In Figur 1b) ist das Aufbringen der Trennschicht 12 nicht näher dargestellt. Es kann grundsätzlich, wie in Figur 1b) zu erkennen ist, ebenfalls durch ein Siebdruck- oder Schablonendruckverfahren erfolgen. Allerdings ist es auch zweckmäßig, die Trennschicht 12 beispielsweise aufzusprühen. Das Aufsprühen kann in Form eines Schlickers oder eines Aerosols erfolgen. Es kann allerdings auch zweckmäßig sein, in einem separaten Prozess eine strukturierte Grünfolie herzustellen (Green Tape) und diese auf die erste Schicht 8 aufzulaminieren. In allen drei Fällen kann es durchaus zweckmäßig sein, dass die Trennschicht 12 neben dem Salz auch noch zusätzliche Additive zur Gewährleistung der rheologischen Eigenschaften, beispielsweise zum Schlickergießen oder zum Foliengießen oder zum Siebdrucken, enthält.

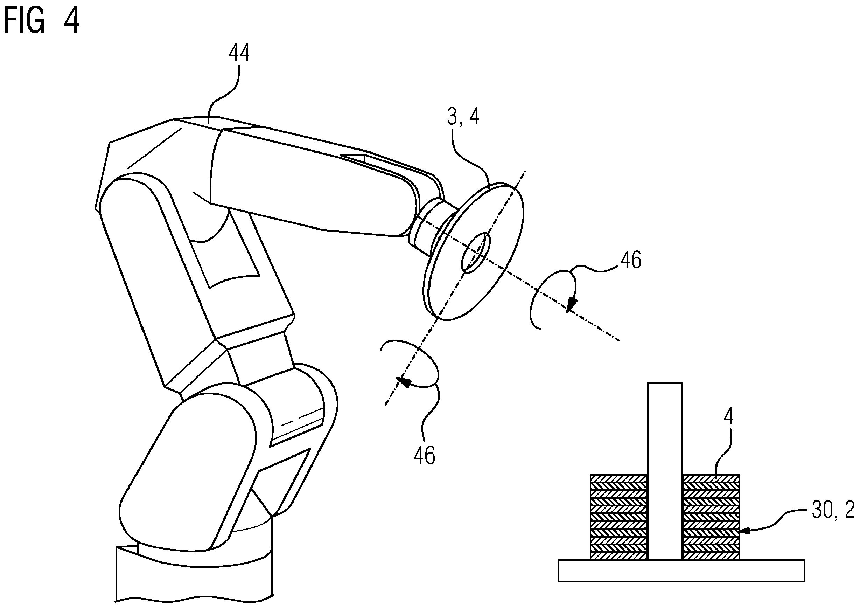

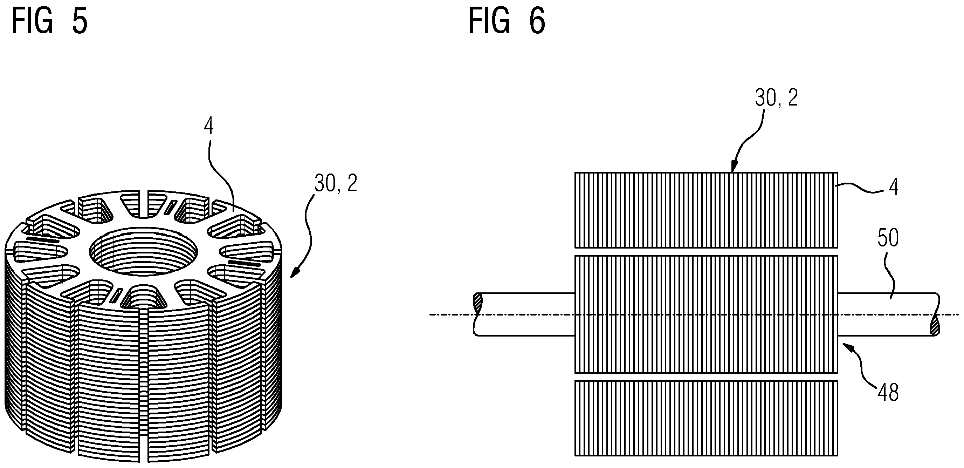

In Figur 1c) ist gezeigt, wie auf die Trennschicht 12 nun ein Grünkörper 6 in Form einer zweiten Schicht 14 analog der ersten Schicht 8 in Figur 1a) aufgedruckt wird. Die erste Schicht 8 und die zweite Schicht 14 unterscheiden sich strukturell nicht voneinander. Sie werden aus der gleichen Paste 28 zum gleichen Grünkörper 6 erzeugt. Die unterschiedlichen Bezugszeichen sollen lediglich ausdrücken, dass die erste Schicht 8 direkt auf das Substrat gedruckt wird und die zweite Schicht 14 auf die Trennschicht 12. Die Schritte gemäß den Figuren 1b) und 1c) können beliebig häufig wiederholt werden, bis eine dreidimensionale Struktur 2 in dem Grünzustand 16 entsteht, die in Figur 2 abgebildet ist. Hierbei handelt es sich um den Grünzustand 16 einer dreidimensionalen Struktur 2, die nach dem im Weiteren zu beschreibenden Wärmebehandlungsprozess einen Magnetblechstapel 30 bilden wird (vgl. Figuren 4 und 5).

In Figur 3 sind mehrere Abschnitte a, b, c und d der weiteren Behandlung der dreidimensionalen Struktur 2 im Grünzustand 16 dargestellt. Zunächst ist in Figur 3a) ein Entbinderungsprozess 38 dargestellt, in dem Bindemittel aus dem Grünzustand 16, insbesondere organische Bindemittel, verdampfen bzw. zersetzt werden. In einem weiteren Schritt gemäß Figur 3b) erfolgt ein Wärmebehandlungsprozess 26, bei dem die Temperatur gegenüber dem Prozess 38 erhöht wird. Bei dem Wärmebehandlungsprozess 26 wird eine Temperatur gewählt, die zu einem Sinterprozess von Partikeln in den Grünkörpern 6 führen. Die Mikrostruktur der Grünkörper 6 und somit in ihrer Gesamtheit der dreidimensionalen Struktur 2 im Grünzustand 16 weist dabei Partikel auf, insbesondere bei der Herstellung von Magnetblechen Eisenpartikel, die durch mechanische Verklammerung miteinander verbunden sind. Während des Wärmebehandlungsprozesses 26 setzen Diffusionsprozesse ein, sodass atomare oder molekulare Diffusion zwischen den Korngrenzen stattfindet und eine stoffschlüssige Verbindung zwischen den einzelnen hier nicht dargestellten Partikeln entsteht. Dieser Prozess findet bei dem beispielhaft beschriebenen Magnetblech mit Eisenpartikeln zwischen 900° C und 1350° C statt. Nach Beendigung des Wärmebehandlungsprozesses 26 ist im Idealfall ein möglichst dichter Körper mit einer sehr geringen Restporosität von weniger als 5 % im dann fertigen Magnetblech entstanden. Die dreidimensionale Struktur 2 gemäß Figur 3b) umfasst eine Mehrzahl von planaren Einzelkomponenten 3, die die beschriebene Mikrostruktur aufweisen, die in diesem Stadium jedoch noch durch die Trennschichten 12 voneinander getrennt sind.

Bisher ist bezüglich der Mikrostruktur lediglich auf die Mikrostruktur der Grünkörper 6 und der daraus entstehenden planaren Einzelkomponenten 3 (beispielsweise Magnetbleche 4) eingegangen worden. Wie in Figur 1b) beschrieben, ist jedoch zwischen zwei jeweiligen Grünkörpern 6 eine Trennschicht 12 angeordnet. Diese Trennschicht 12 besteht bzw. umfasst bevorzugt ein Salz, das eine Sintertemperatur aufweist, die höher liegt als die Sintertemperatur der funktionalen Partikel des Grünkörpers 6. Wenn die Sintertemperatur des Grünkörpers 6, insbesondere bei Verwendung von Eisenpartikeln, etwa bei 1.200° C liegt, so liegt die Sintertemperatur eines verwendeten Salzes für die Trennschicht 12 bevorzugt bei etwa 1.400° C. Dabei ist anzumerken, dass die jeweilige Schmelztemperatur der betrachteten Materialien, beispielsweise der Eisenpartikel oder der Salzpartikel der Trennschicht 12, noch einmal deutlich über der Sintertemperatur liegt. Für die Salze der Trennschicht 12 haben sich Schmelztemperaturen von mehr als 1.500° C als zweckmäßig erwiesen. Dabei ist anzumerken, dass die Trennschicht 12 neben dem zentralen Bestandteil der noch zu diskutierenden Salze noch andere funktionale Stoffe wie Bindemittel enthalten kann.

Als besonders zweckmäßig haben sich als Salze die im Folgenden aufgelisteten Materialgruppen mit den jeweils genannten Schmelzpunkten bewährt:
I. Oxide: Titanoxid (Schmelztemperatur Tₛ = 1855°C, unlöslich in Wasser, aber löslich in heißen konzentrieren Säuren), Calciumoxid (Tₛ = 2580°C, nur bei Abwesenheit von Wasser), Siliziumoxid (Tₛ = 1713°C, löslich in Flusssäure), Strontiumoxid (Tₛ = 2531°C, reagiert mit Wasser zu wasserlöslichem Sr(OH)2, Lanthanoxid (Tₛ = 2315°C, löslich in Säuren)
II. Fluoride: Dysprosiumfluorid (Tₛ = 1360°C), Cer(III)fluorid (Tₛ = 1460°C, unlöslich in Wasser, aber löslich in starken Säuren)
III. Sulfide: Magnesiumsulfid (Tₛ > 2000°C), Chromsulfid (Tₛ = 1350°C, unlöslich in Wasser, aber leicht löslich in Salpetersäure)
IV. Nitride: Zirconiumnitrid (Tₛ = 2980°C, nahezu unlöslich in Wasser, aber löslich in konzentrieren Säuren)
V. Carbide: Wolframcarbid (Tₛ = 2785°C, unlöslich in Wasser, aber löslich in Salpetersäure)
VI. Sulfate: Calciumsulfat (Zersetzung des Anhydrits I ab 1450°C)
VII. Phosphate: Calciumphosphat (Tₛ = 1670°C)
VIII. Carbonate: Bariumcarbonat (Zersetzung > 1450°C, nahezu unlöslich in Wasser, aber löslich in Salpeter- und Salzsäure)

Nach dem Wärmebehandlungsprozess 26 der dreidimensionalen Struktur weisen die darin befindlichen planaren Einzelkomponenten 3 die beschriebene gesinterte Struktur auf. Die Trennschicht 12 bleibt jedoch, da deren Sintertemperatur höher gelegen ist, als poröses und sprödes Material bestehen. Dies erleichtert die in den Figuren 3c) und 3d) beschriebenen Vereinzelungsschritte. Im Idealfall handelt es sich bei dem Salz um ein in einem Lösungsmittel, insbesondere Wasser, lösliches Salz. In dem Fall müsste die gesinterte dreidimensionale Struktur 2 in ein flüssiges Medium 20 in Form eines Lösungsmittels 22 gelegt werden und die Trennschicht 12 lediglich aus den Zwischenräumen zwischen den einzelnen Magnetblechen 4, die die dreidimensionale Struktur 2 bilden, herausgelöst werden. Somit wären die planaren Einzelkomponenten 3 vereinzelt.

Sollte es für das im Prozess bevorzugte Salz der Trennschicht 12 kein geeignetes Lösungsmittel geben, so wäre auch eine chemische Zersetzung dieses Salzes angebracht. Hierbei wäre als flüssiges Medium 20 eine hier nicht dargestellte Säure oder Lauge zum Vereinzeln der planaren Einzelkomponenten 3 und zum Herauslösen der Trennschicht 12 zweckmäßig. Wird zur Zersetzung der Trennschicht 12 eine chemische Zersetzung, insbesondere unter Verwendung von Säuren und Laugen, verwendet, ist es zweckmäßig, den Grünkörper bzw. das spätere Magnetblech 4 mit einer zusätzlichen Inertschicht zwischen der entfernbaren Trennschicht 12 und dem Magnetwerkstoff des Magnetbleches 4 bzw. der planaren Einzelkomponenten 3 im Allgemeinen zu versehen. Hiermit wird die Oberfläche der planaren Einzelkomponenten 3 passiviert, um einen ungewünschten Angriff bzw. eine Zersetzung der Einzelkomponente 3 zu verhindern. Für derartige Inertschichten, die in den Figuren 1, 2 und 3 nicht explizit dargestellt sind, eignen sich inerte Materialien auf Oxidbasis, insbesondere Aluminiumoxid, Zirkonoxid, Magnesiumoxid, Ceroxid oder Yttriumoxid sowie Mischungen daraus wie zum Beispiel durch Yttrium verstärktes Zirkonoxid.

Alternativ zu der in Figur 3c) dargestellten Methode durch das Herauslösen und das Herausätzen der Trennschicht 12 könnte die dreidimensionale Struktur 2 ebenfalls in ein flüssiges Medium 20 gegeben werden und mit einem Ultraschallerzeuger 42 mit Ultraschall versetzt werden. Der Ultraschall ist dabei ein zweckmäßiges Mittel, alternierend Zug- und Druckspannungen auf die dreidimensionale Struktur 2 einzubringen, um die Trennschicht 12 zu zerstören und zu entfernen. Hierzu wären neben dem Ultraschall auch andere mechanische Verfahren durch pulsierende Bewegungen der dreidimensionalen Strukturen zweckmäßig. Grundsätzlich können die Methoden gemäß Figur 3c) und 3d) bei Bedarf auch gemeinsam bzw. hintereinander angewandt werden, wenn dies prozesstechnisch notwendig ist.

Nach den Prozessschritten gemäß Figur 3 liegen die planaren Einzelkomponenten 3, in diesem Beispiel als Magnetbleche 4 ausgestaltet, vereinzelt vor. Nun kann es zweckmäßig sein, wenn sie nach den Prozessschritten in Figur 3 immer noch in derselben Position verharrt sind und nicht zueinander verrückt sind, diese genauso zu belassen, da etwaige Dickenunterschiede während des Druckvorganges durch die ursprüngliche Positionierung am besten ausgeglichen werden.

Sollte der Prozess gemäß Figur 3 jedoch zu einer Vereinzelung führen, indem die ursprüngliche Lage der planaren Einzelkomponenten 3 nicht bewahrt werden kann, wäre es ggf. zweckmäßig, die planaren Einzelkomponenten 3 bzw. die Magnetbleche 4 in der Grünstruktur 16, ggf. bereits vor dem Wärmebehandlungsprozess 26 oder auch nach dem Wärmebehandlungsprozess 26 so zu markieren, dass sie anschließend wieder in die ursprüngliche Anordnung zurückgesetzt werden können. Dies ist anhand eines Roboters 44 in Figur 4 schematisch dargestellt. Die planare Einzelkomponente 3 bzw. das Magnetblech 4 kann von dem Roboter 44 aufgenommen werden und entlang der Positionierungsrichtung 46 gedreht werden, sodass im Weiteren in diesem Beispiel ein Magnetblechstapel 30 entsteht, der der dreidimensionalen Struktur 2 entspricht. Dieser Magnetblechstapel 30 enthält dann eine Mehrzahl von optimiert angeordneten Magnetblechen 4.

Die dreidimensionale Struktur 2 in den Figuren 1 - 4 ist dabei sehr schematisch und vereinfacht dargestellt, daher ist in Figur 5 noch einmal eine präzisere, der Realität näherkommende Darstellung eines Magnetblechstapels 30 angegeben, der einzelne Magnetbleche 4 umfasst. Ein derartiger Magnetblechstapel 30 ist im Weiteren auf eine Welle 50 aufgezogen, sodass der Rotor 48 einer elektrischen Maschine dargestellt ist.

Gegenüber den herkömmlichen Herstellungsverfahren von Magnetblechen, die in der Regel aus einem großen Blechteil gestanzt werden müssen bzw. die auch im Einzelnen im Siebdruckverfahren hergestellt werden, weist das vorbeschriebene Verfahren verschiedene Vorteile auf. Zum einen handelt es sich insbesondere gegenüber der Herstellung von einzelnen Magnetblechen im Siebdruck- oder Schablonendruckverfahren um eine signifikante Kosteneinsparung, da eine deutlich verringerte Anzahl an thermischen Prozessschritten nötig ist. Insbesondere vereinfacht sich auch das gesamte Handling der einzelnen Grünkörper 6, da eine stabilere dreidimensionale Struktur 2 im Grünzustand 16 deutlich besser handhabbar ist als ein einzelner Grünkörper 6, der eine Dicke in der Größenordnung von 100 µm aufweist. Ferner lässt sich eine höhere Stapelgenauigkeit erzielen, was bezüglich der Figuren 3 und 4 beschrieben ist. Diese bringt auch eine geringere Toleranz im Stapelaufbau mit, wodurch weniger Hohlräume und Spalte im fertigen Magnetblechstapel 30 auftreten, was eine form- und kraftschlüssige Verbindung verbessert. Der so entstandene Magnetblechstapel 30 weist damit wiederum eine höhere mechanische Festigkeit auf. Auch seine magnetischen Eigenschaften werden damit verbessert. Im Weiteren führen die bereits beschriebenen Vorteile bezüglich der Stapelung der einzelnen Grünkörper 6 und deren gemeinsame Wärmebehandlung 26 zu geringerem Nachbearbeitungsbedarf. Auch hierdurch werden die Prozesskosten reduziert.

### Bezugszeichenliste

- 2: dreidimensionale Struktur
- 3: planare Einzelkomponenten
- 4: Magnetblech
- 6: Grünkörper
- 8: erste Schicht
- 10: Siebdruckverfahren
- 12: Trennschicht
- 14: zweite Schicht
- 16: dreidimensionale Struktur / Grünzustand
- 18: Sintervorgang
- 20: flüssiges Medium
- 22: Lösungsmittel
- 26: Wärmebehandlung
- 28: Druckpaste
- 30: Magnetblechstapel
- 32: Rahmen für Schablone
- 34: Rakel
- 36: Substrat
- 38: Entbinderung
- 40: Entferner der Trennschicht
- 42: Ultraschallerzeuger
- 44: Roboter
- 46: Positionierer
- 48: Rotor, elektrischer Maschine
- 50: Welle

## Patentansprüche

1. Verfahren zur Herstellung einer dreidimensionalen Struktur 2 aus planaren Einzelkomponenten (3, 4), umfassend folgende Schritte:
a) Drucken eines Grünkörpers (6) einer ersten Schicht (8) mittels eines Siebdruckverfahrens (10),
b) Aufbringen einer Trennschicht (12) auf den Grünkörper (6) der ersten Schicht (8),
c) Drucken eines zweiten Grünkörpers (6) einer zweiten Schicht (14) auf die Trennschicht (12),
d) Wiederholen der Schritte a) bis c), bis die dreidimensionale Struktur (2) in einem Grünzustand (16) vorliegt,
e) Wärmebehandlung (26) der dreidimensionalen Struktur (2) bei einer Temperatur, bei der ein Sintervorgang der einzelnen Schichten (8, 14)der Grünkörper (6) eintritt,
f) Entfernen der Trennschicht (12), so dass die dreidimensionale Struktur (2) entsteht.

2. Verfahren nach Anspruch 1, **dadurch gekennzeichnet, dass** Schritt f) folgende Schritte umfasst:
f1) Vereinzeln von gesinterten, planaren Einzelkomponenten (3, 4) nach Entfernen der Trennschicht (12),
f2) erneutes Zusammensetzen der gesinterten, vereinzelten, planaren Einzelkomponenten (3, 4) zu der dreidimensionalen Struktur (2).

3. Verfahren nach Anspruch 2, **dadurch gekennzeichnet, dass** die planaren Einzelkomponenten (3, 4) in der gleichen geometrischen Anordnung, in der sie vor dem Vereinzeln vorgelegen haben, erneut zusammengesetzt werden.

4. Verfahren nach einem der Ansprüche 1 bis 3, **dadurch gekennzeichnet, dass** die Trennschicht (12) eine Salzschicht ist.

5. Verfahren nach einem der Ansprüche 1 bis 4, **dadurch gekennzeichnet, dass** die Trennschicht (12) gemäß Schritt f) mittels eines flüssigen Mediums (20) entfernt wird.

6. Verfahren nach Anspruch 5, **dadurch gekennzeichnet, dass** das flüssige Medium (20) als Lösungsmittel (22) oder als chemisches Zersetzungsmittel wirkt.

7. Verfahren nach einem der Ansprüche 1 bis 5, **dadurch gekennzeichnet, dass** die Trennschicht (12) gemäß Schritt f) durch Einwirkung von pulsierenden Druck- und Zugkräften entfernt wird.

8. Verfahren nach einem der vorhergehenden Ansprüche, **dadurch gekennzeichnet, dass** die Trennschicht (12) eine höhere Sintertemperatur aufweist als die Temperatur der Wärmebehandlung (26).

9. Verfahren nach einem der vorhergehenden Ansprüche, **dadurch gekennzeichnet, dass** eine Druckpaste (28) zum Drucken des Grünkörpers (6) der Schichten (8, 14) als funktionale Bestandteile Eisenpartikel aufweist.

10. Verfahren nach Anspruch 9, **dadurch gekennzeichnet, dass** die Eisenpartikel mindestens 97 Gew. % Eisen umfassen.

11. Verfahren nach einem der vorhergehenden Ansprüche, **dadurch gekennzeichnet, dass** die Trennschicht (12) dünner als 20 µm ist.

12. Verfahren nach einem der vorhergehenden Ansprüche, **dadurch gekennzeichnet, dass** zwischen den Schichten (8, 14) und der Trennschicht (12) eine Inertschicht angeordnet ist.

13. Verfahren nach Anspruch 12, **dadurch gekennzeichnet, dass** die Inertschicht ein Oxid des Aluminiums, Zirkons, Cers, Yttriums oder Mischungen daraus umfasst.

14. Verfahren nach einem der vorhergehenden Ansprüche, **dadurch gekennzeichnet, dass** die planare Einzelstruktur (3) ein Magnetblech (4) ist.

15. Verfahren nach Anspruch 14, **dadurch gekennzeichnet, dass** die dreidimensionale Struktur (2) ein Magnetblechstapel (30) für eine elektrische Maschine ist.
